# EUROPEAN PATENT APPLICATION

(11) **EP 4 398 051 A1**
(43) Date of publication of application: **10.07.2024**
(21) Application number: 23020001.6
(22) Date of filing: 05.01.2023
(51) Int. Cl.: G05B 13/04

(54) **METHOD FOR OPERATING A PROCESS PLANT, CONTROL SYSTEM AND PROCESS PLANT**

(71) Applicant: Linde GmbH, 82049 Pullach (DE); Rheinisch-Westfälische Technische Hochschule (RWTH) Aachen, 52062 Aachen (DE)
(72) Inventor: Peschel, Andreas, 82049 Pullach (DE); Ecker, Anna-Maria, 82049 Pullach (DE); Mitsos, Alexander, 52078 Aachen (DE); Schulze, Jan, 52064 Aachen (DE)
(74) Representative: Imhof, Dietmar

(57) **Abstract**

The invention relates to a method for operating a process plant, wherein the process plant is configured to perform at least one of substance modifications and substance conversions, with the aid of at least one of physical, chemical, biological, and nuclear effects, preferably, separation of air into nitrogen and/or oxygen and/or argon and/or other components included in air, said method comprising the following steps, performed by a control system comprising a model predictive controller having a control model (320), wherein the model predictive controller is a nonlinear model predictive controller, and wherein the control model (320) is a hybrid model, wherein the hybrid model comprises at least one data-based component (324, 326, 424) and at least one dynamic component (322): initialising the control model; determining (230), based on the initialised control model, one or more setpoints for one or more parameters of one or more process components and/or units of the process plant; and providing the one or more setpoints to control the process plant.

## Description

The present invention relates to a method for operating a process plant, a control system and a process plant, such as a process plant comprising an air separation unit.

### Background of the Invention

Process plants (also called chemical plants or chemical engineering plants) are usually understood to be plants for carrying out substance modifications and/or substance conversions with the aid of purposeful physical and/or chemical and/or biological and/or nuclear effects. Such modifications and conversions typically comprise crushing, sieving, mixing, heat transferring, cohobating, crystallizing, drying, cooling, filling, mass transfer between different forming phases, and superimposed substance transformations, such as chemical, biological or nuclear reactions.

A process plant can comprise several different components such as different heat exchangers, e.g., plate-fin heat exchangers (PFHE) or coil-wound heat exchangers (CWHE), columns, e.g. distillation and/or adsorption and/or wash columns, machines like compressors, boosters, turbines, pumps, cold boxes, etc. For example, process plants can be plants for producing specific gases, i.e. the plants can be or comprise air separation units, natural gas plants, ethylene plants, hydrogen plants, adsorption plant, etc.

A way to control the operation of such a process plant is using a so-called model predictive control or a model predictive controller (MPC). Linear models are typically widely used but are limited in their application range. Using nonlinear model predictive control can be difficult, however. In view of this, the object of the present invention is to provide an improved way for operating a process plant, preferably overcoming difficulties in using nonlinear model predictive control.

### Disclosure of the invention

This object is achieved by providing a method for operating a process plant, a control system and a process plant according to the independent claims. Advantageous further embodiments form the subject matter of the dependent claims and of the subsequent description.

The present invention relates to operating a process plant. A process plant is configured to perform at least one of substance modifications and substance conversions, with the aid of at least one of physical, chemical, biological, and nuclear effects. Such modifications and conversions comprise, for example, at least one of crushing, sieving, mixing, heat transferring, cohobating, crystallizing, drying, cooling, filling, and superimposed substance transformations, such as chemical, biological or nuclear reactions. The process plant can comprise several different components such as different heat exchangers, e.g. plate-fin heat exchangers (PFHE) or coil-wound heat exchangers (CWHE), columns, e.g. distillation and/or adsorption and/or wash columns, machines like compressors, boosters, turbines, pumps, cold boxes, etc. For example, process plants can be plants for producing specific gases, i.e. the plants can be or comprise air separation units, natural gas plants, ethylene plants, hydrogen plants, adsorption plant, etc.

In the following, the invention will be described with a process plant that is or comprises one or more air separation units (ASUs). It is noted, however, that the invention is also applicable to process plants in the sense mentioned above but also to additional and/or other types than air separation units; the invention is applicable, e.g., to industrial chemical processes in general. For example, the process plant can be configured to perform one or more processes related to at least one of natural gas, synthesis gas, petrochemicals, hydrogen, downstream processes of electrolysis (e.g., electrolysis of water with PEM, AEL, AEM, SOEC and combinations thereof, ammonia loop and methanol loop based on hydrogen from electrolysis). In an embodiment, the process plant comprises or is at least one of an air separation unit, a natural gas plant, an ethylene plant, a hydrogen plant and an adsorption plant.

Air separation units (ASUs), typically, are highly integrated systems with advanced requirements regarding the optimisation of product recovery and load change capability. These processes should be able to react fast to changes in customer demand while ensuring highest possible product yield at specified purity. Load change times can vary, for example, from 0.5% per minute to 10% per minute depending on the plant topology and/or component design and/or operating strategy. If air separation units include column systems for argon separation, for example, controlling the transfer stream from the double column to the argon system is challenging and limits load change speeds. Typical impurity limits for nitrogen products, for example, are 1 ppm oxygen (O2). Oxygen products typically include 99.5% to 99.9% oxygen. Argon products are typically contaminated by 1 ppm oxygen (02) and 1 ppm nitrogen (N2).

Volatile availability and price patterns of electric energy, for example, can require flexible (e.g., load-flexible and/ or production-rate-flexible) operation of air separation processes. From a control point of view, air separation units are strongly intercoupled multi-variable systems. Hence, optimisation of the setpoints of base-layer controllers depending on the current state of the plant is necessary and can be realised by model predictive control (MPC) as mentioned above. If model predictive control is applied, i.e., if operation of the process plant is based on model predictive control, processes or industrial processes such as air separation processes are usually controlled using linear model predictive controllers (LMPC).

Model predictive control is an advanced control strategy. A model predictive controller comprises a model, e.g., a dynamic model, of the controlled process. Applying the dynamic model of the process provides a prediction of the future process behaviour of the process plant or the controlled process. Optimal control action can be computed using mathematical algorithms.

The dynamic model can be based on, for example, physical equations and/or design information (then, the model is called a white box model). The dynamic model can also be based on, for example, mathematical models for input and/or output correlation of data information (then, the model is called a black box model), e.g., nonlinear autoregressive exogenous (NARX) models. The dynamic model can also be based on, for example, physically and/or mathematically motivated model structures that are (partly or fully) interpretable, combined with design information, and combined with empirical correlations from data information (then, the model is called grey box model).

White box models are based on physical principles and design information; such model is also called a first principles model. Hence, these models are valid and applicable within a wide range of operation of the process plant. On the downside, for complex processes, these models can limit the speed of optimisation when applied as control models in plant operation. Grey box models can be, in many cases, optimised faster than white box models but are more restricted in their range of validity.

Depending on the modelling strategy, the control model, that is the model used for the MPC, can be linear or nonlinear. A linear model results in a linear model predictive controller, LMPC, and a nonlinear model results in a nonlinear model predictive controller, NMPC.

LMPC is typically based on the identification of linear models from recorded plant data. The plant data is obtained, e.g., from step tests based on one or more points of operation. In this context, it can be assumed that the plant's dynamic system behaves linearly (in this point of operation). However, air separation and other industrial processes, typically, exhibit nonlinear dynamics. The assumption of linear dynamic behaviour restricts the reliable operating range of the generated LMPC. Hence, the controller's performance becomes the poorer the further the process is operated from the reference operation point (for which the linearity is approximately valid).

Compared to LMPC, applying NMPC and specifically including the natural nonlinearity of the process in the control model for industrial process control allows for an innovative automation solution beyond LMPC. This enables, for example, extended controller operation ranges. This also enables, for example, reliable and safe exploration of new operating regions when including physical and/or mathematical knowledge about the system in the control model (white box and grey box models). More specifically, this feature allows for the application of the model in operating regions outside the model's identification range. This also enables, for example, faster load changes for load flexible production. This enables, for example, further optimisation of operational efficiency.

Using or applying NMPC for operating or controlling the operation of a process plant, however, has some challenges. While LMPC is an established automation solution in industry, practical applications of NMPC are still rare due to i) challenges arising in control model development, ii) real time optimisation of the control model, iii) online state initialisation of complex nonlinear models, and iv) lack of available commercial frameworks.

A way to enable ii) real time capability is to apply model reduction to a detailed process model. Model reduction refers to a procedure where a detailed model is reduced in size and/or complexity so that the reduced model's properties (e.g., number of model variables, number and/or type of mathematical operations) allow for a smaller effort with regard to a purpose and/or use of the reduced model such as mathematical optimization. Model reduction, however, has some downsides and challenges. Selecting a suitable reduction method and performing model reduction and/or implementing a reduced model can be time consuming, non-intuitive and thus challenging for control engineers. Model reduction does not guarantee real-time capability of a controller using a reduced model. Reduced models can still be computationally demanding. Model reduction can possibly lead to a significant offset between the reduced model and the detailed model or the real process plant. If the offset is too large, it needs to be compensated. Large offsets affect the NMPC performance. Model reduction can be accompanied by a limitation of the range of validity of the reduced model (compared to a more detailed model). If the range of validity of the reduced control model is limited, the reliable operating range of the NMPC is limited.

An approach for model reduction and reduced modelling is the use of so-called hybrid models. A hybrid model can combine at least one data-based component with at least one dynamic component, e.g., a low-dimensional dynamic component. In these generic reduced models, the data-based components, e.g., artificial neural networks or wave equations, represent the static or quasi-static nonlinear character and/or patterns of the process (i.e., "the general shape of the plant"). On the other hand, the low-order dynamic model parts describe the dynamic response of these patterns to external excitation (i.e., "the general time response of this shape").

Within the present invention, operating the process plant is performed by means of a control system (or controller, i.e., a computing or processing unit). The control system comprises (or implements) a model predictive controller having a control model, i.e., model predictive control is used. A method of operating comprises the step of initialising the control model. The method comprises the further step of determining, based on the initialised control model, one or more setpoints for one or more parameters of one or more process components and/or units of the process plant (or processes of these process components and/or units) . The one or more parameters can comprise one or more of the following parameters: a valve position, a flow of medium, a pressure of medium, a temperature of medium, a component concentration of medium, and a pump, compressor, or turbine throughput. This step can comprise, for example, an optimization or optimization calculations as is typical for model predictive control, what can include, for example, predicting different values into the future and selecting the best ones. The method comprises the further step of providing the one or more setpoints to control the process plant, in particular, the actual control.

The model predictive controller used is a nonlinear model predictive controller. Further, the control model is a hybrid model (or grey-box model); the control model comprises at least one data-based component and at least one dynamic component. The data-based component(s) can be or are based on, for example, artificial neural networks or polynomials.

A hybrid model combines at least one data-based component, e.g., artificial neural networks or wave equations, with at least one physical information component, e.g., a dynamic model structure, a physical correlation, or geometry and/or topology of components of the process plant. A hybrid model does not necessarily have to involve physical equations, but can also be defined based on physical equation structure (specifies the structure of the reduced model, but not necessarily explicit equations).

A (physical) dynamic model - or the at least one dynamic component of the hybrid model - can be based on at least one of thermofluidic correlations, thermodynamic correlations, phenomenological (i.e., empiric) correlations, mechanical equations (of state and physical properties of the plant and material and components used therein). Further, the dynamic model can be based on geometry and/or topology of components of the process plant. Such a (physical) model is also called a first principles model as it is based on physical properties like heat and mass balances and the like. A data-based model in contrast does not reflect actual physical structures or properties of the process plant but rather provides output data based on input data, like a black box.

The dynamic component(s) can be or are based on low-dimensional dynamic components of a mathematically simple type. In particular, dynamic component(s) can have a linear or bilinear structure, i.e., this component is a linear or bilinear dynamic model. Such a linear or bilinear structure reflects the modelled part of the process plant (e.g., a certain process) with linear behaviour. This allows an efficient and fast optimization calculation. Nevertheless, the model predictive controller (and the entire hybrid model as such) can be nonlinear due to the additional data-based component(s).

A (dynamic) hybrid model can be used that (explicitly) has the property that its dynamic component is linear/bilinear and their non-linearity is exactly and/or exclusively represented by the (data-driven) component. The property of it is particularly that such models can be determined in a model reduction procedure (and not via an empirical input/output identification). A specific reason why such models are used is because such hybrid models are particularly well suited for optimization, because this model structure can be used there in a very specific way (better than e.g. empirical NARMAX models).

In an embodiment, the arrangement of the at least one data-based component and the at least one dynamic component is sequential. In this case, the dynamic component makes an (abstract) prediction in time and the data-based nonlinear component "translates" these predictions into usable information, e.g. temperatures, pressures, quality scores or the like (as needed for the respective setpoints).

This sequential structure can very efficiently be used for optimisation because the time evolution of the (abstract) prediction does not depend on the data-based nonlinear component. As a consequence, the data-based nonlinear component is not explicitly part of the optimization problem; rather, the data-based nonlinear component is only (partially) implicitly evaluated as part of the operating constraints and cost function; or the optimisation is based on or is performed using the at least one dynamic component, i.e., the at least one dynamic component only. This means that the optimisation problem (including safety constraints) can be formulated with respect to the smaller variable space of the dynamic variables; the optimisation problem thus has a smaller dimension and can be solved very efficiently.

Such a hybrid model allows for computer efficient online optimization. The hybrid model used is of a special structure that turned out to be computationally favourable for NMPC. A feature of such a hybrid model is that the computation and/or evaluation of the data-based component(s) only depends on the dynamic component(s) (and possibly external signals). The NMPC can exploit this feature, leading to a considerable computational speed-up. Specifically for the sequential structure, the mathematical program solved by the controller can be formulated only in terms of the dynamic components (variables) of the hybrid model. Thereby, the NMPC condenses the complex optimization of the hybrid models into a very compact optimization. This enables a very computer efficient solution of the control problem compared to using a general-purpose optimization solver.

NMPC typically relies on repeated optimization of the hybrid model with suitable objective function and constraints. In embodiments of the invention, the optimization can be performed using numerical algorithms such as full discretization, direct single shooting, or direct multiple shooting method and underlying nonlinear and/or linear programming methods, for example, sequential quadratic programming method and/or interior point method. Single shooting and multiple shooting optimization methods additionally include an integration solver, e.g., an ordinary differential equation solver or differential-algebraic equation solver. Further, the numerical optimization method possibly includes a structure detection method, sparsity exploitation and/or decomposition scheme.

In an embodiment, the arrangement of the at least one data-based component and the at least one dynamic component is integrated, i.e., the components are integrated to one another. Such an integrated structure cannot be exploited quite as effectively as the sequential structure, but in certain cases, this structure leads to more accurate models. Again, due to the simple structure, the optimization of such a model is generally (much) more efficient than the optimization of a (pure) physical model.
In an embodiment, the control model is optimized, preferably, online. Such (online) optimization can also be complemented by an online improvement of the hybrid model, where the data-based components are adapted online to improve the controller performance. Adaptation means, e.g., online training or modification of the data-based component (e.g., artificial neural network), where online data, e.g. measurements of the plant, is used to improve the control model.

In an embodiment of the invention, the control model is obtained by model reduction from a digital twin. For reduced model generation, for example, a stepwise procedure can be used that clearly separates between the tasks i) digital twin modelling and simulation (data sampling), ii) model reduction (model structure specification and training of data-based components), and iii) controller design, testing and deployment. Thereby, structured steps are provided and gates and/or deliverables can be established in the modelling and control procedure. The different steps can be carried out by different experts of their individual fields.

In an embodiment of the invention, the at least one data-based component is trained based on at least one of simulation data and process data. The model structure selection can be part of the hybrid model building procedure. Hybrid model building is often associated with a significant effort of model (structure) selection and model implementation. Now, a framework can provide a library of generic formulations of the hybrid models and allows for reduced modelling of a particular process (model building) in a flow sheeting manner including process structure and other design information. Simulation data and/or process data can be incorporated in the model building procedure, where the data-based component(s) are specified, e.g., trained. The model building of the reduced model can start from a given digital twin model but can also be independent of the digital twin and build the reduced model from scratch in a flow sheeting manner. It is noted that such framework can also be used for white-box models and black-box models (not only grey-box or hybrid models)

In an embodiment of the invention, the control model can be improved (optimised) online, as mentioned above. Because hybrid models have at least one data-based component, the model can be set up offline and be updated online. Thereby, the hybrid structure not only enables computer efficient online applications but also continuous improvement of the model.

In general, a digital twin is a digital representation of an intended or actual real-world physical product, system, or process (a physical twin) that serves as the effectively indistinguishable digital counterpart of it for practical purposes, such as simulation, integration, testing, system monitor, and maintenance. A digital twin of an existing entity can, but must not necessarily, be used in real time and regularly synchronized with the corresponding physical system. Within the present invention, the digital twin is the digital representation of the real world (physical) process plant and/or processes performed by the process plant. As such, there does not need to be any interference or online connection between the digital twin and the process plant. However, within the present invention, the digital twin can be used to provide an initial control model as the result of a model reduction procedure for a control model of the MPC used for operating the (real world) process plant.

The digital twin can be based on (or be) a (detailed) dynamic model of the process plant. This dynamic model can be based on at least one of thermo fluidic correlations, thermo dynamic correlations, phenomenological (i.e., empiric) correlations, mechanical equations (of state and physical properties of the plant and material and components used therein). Further, the dynamic model can be based on geometry and/or topology of components of the process plant. In an embodiment, the dynamic model can be configured to represent a transition from one to another state of the process plant, in particular, of a separation column of the plant.

Such a (physical) model is also called a first principles model as it is based on physical properties like heat and mass balances and the like. This model can represent the geometry and topology of equipment or components in the same level of detail that is being used in process and/or equipment design. That is, heat exchangers, for example, are modelled in one space dimension whereas distillation columns are modelled as a sequence of theoretical trays. This approach enables the use of design correlations for pressure drops, heat transfer coefficients, fluid holdup and so on. However, unlike the equipment design tools, this dynamic model in particular balances holdups for gas and liquid and energy and, hence, allows for modelling transient states of the plant. This dynamic model in particular also covers the entire operating range of the plant. The entire operating range can comprise start-up, regular operation, shut-down, and also failure management. Such model can also be called a pressure-driven model (but does not necessarily have to be a pressure-driven model).

Such dynamic model used as or for the digital twin is different from the control model used in the MPC for operating the process plant. Typically, the dynamic model for the digital twin is more detailed and more complex than the control model. However, the control model for the MPC can, for example, be obtained from the dynamic model of the digital twin. This is also called model reduction as explained above.

The present invention enables the practical implementation and application of reduced modelling and NMPC. So far, model reduction is performed as a problem specific task and involves a high amount of modelling work. The practical application of NMPC is still rare in industry because it is very difficult to implement. The present invention enables a routine for generating reduced control models with little effort using a toolbox. It also enables real time optimization of NMPC due to the tailored reduced model structure combined with structure exploitation of the hybrid reduced model in the optimization step. Implementing NMPC instead of LMPC allows for faster load changes, increased controller operating range and further optimized plant efficiency (e.g., less required MAC (main air compressor) power consumption based on air flow intake during load changes and steady state full load for ASUs without argon production) leading to lower overall energy consumption of the process plant.

An embodiment of the invention relates to a control system, that is configured, preferably by means of a computer program (stored on the control system), to perform a method according to the invention. Such control system can be or comprise or be part of a processing system or processor, for example.

Further aspects of the invention are a computer program with program code means for causing a control system or processing system to perform a method according to the invention, and a computer readable data carrier having stored thereon such a computer program. This allows for particularly low costs, especially when a performing computing unit is still used for other tasks and therefore is present anyway. Suitable media for providing the computer program are particularly floppy disks, hard disks, flash memory, EEPROMs, CD-ROMs, and DVDs etc. A download of a program on computer networks (internet, intranet, cloud applications, etc.) is also possible.

Further advantages and embodiments of the invention will become apparent from the description and the accompanying drawings.

It should be noted that the previously mentioned features and the features to be further described in the following are usable not only in the indicated combinations, but also in further combinations or taken alone, without departing from the scope of the present invention.

The invention will now be further described with reference to the accompanying drawings, which show a preferred embodiment.

### Brief description of the drawings

- Fig. 1: schematically shows a process plant according to an embodiment of the invention;
- Fig. 2: schematically shows a method according to an embodiment of the invention;
- Fig. 3: schematically shows a control model according to an embodiment of the invention;
- Fig. 4: schematically shows a method according to an embodiment of the invention;
- Fig. 5: schematically shows a control model according to a further embodiment of the invention;
- Fig. 6: schematically shows a method according to a further embodiment of the invention; and
- Fig. 7: schematically shows a method according to a further embodiment of the invention.

### Detailed description of the drawings

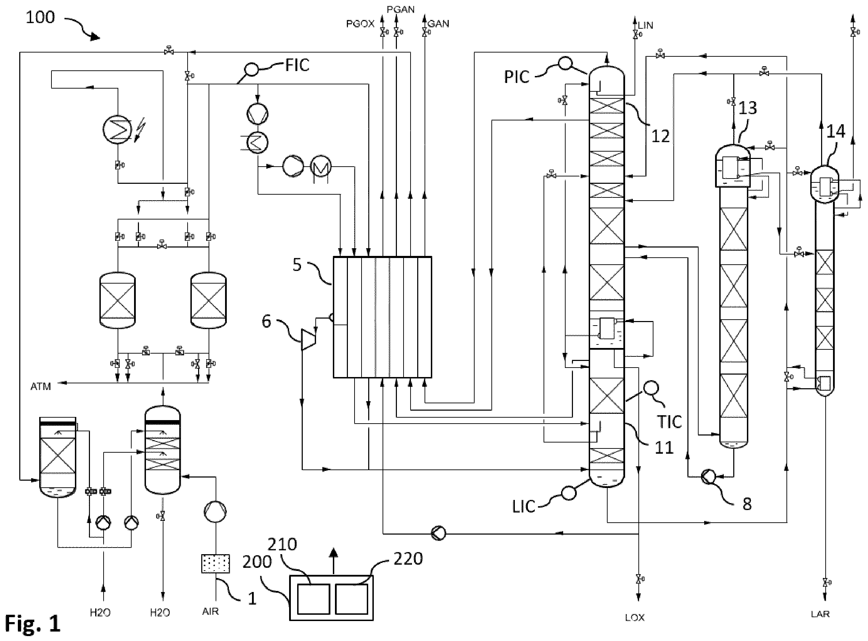

Fig. 1 schematically illustrates a process plant 100 according to an embodiment of the invention. By means of example, process plant 100 comprises or is an air separation unit (ASU) with nitrogen, oxygen, and argon products. The process plant 100 comprises, among other components, a main air supply 1, a main heat exchanger 5, an expansion turbine 6, further heat exchangers, a pump 8, a high pressure column 11 and a low pressure column 12. High pressure column 11 and low pressure column 12 are part of a typical distillation column system.

In the air separation unit, an input air stream, supplied via main air supply 1, is typically compressed, pre-cooled and cleaned. Further, the air stream can be separated into two streams, one of which is fully cooled in the main heat exchanger 5, the other one is only partly cooled in the main heat exchanger 5. The latter one can then be expanded by means of expansion turbine 6. The fully cooled air stream can be supplied to the high pressure column 12 via a heat exchanger, and the partly cooled air stream can be supplied to the low pressure column 11. It is noted that the air separation unit shown here is an example. Other types of ASUs are also possible.

Further, a control system 200, implementing a model predictive controller 210 having a control model 220 is shown. In an embodiment, the process plant comprises the control system 200.

The control system 200 is configured to operate the process plant 100, for example, in that one or more setpoints for one or more parameters of one or more processes (or process components/units) of the process plant 100 are determined and provided. By means of example, different parameters that can be controlled are shown by means of several controllers shown at specific positions within the process plant 100. Such controllers include flow controllers FIC, pressure controllers PIC, liquid level controllers LIC and temperature controllers TIC. The control system can be used to specify setpoints for one or more of these controllers or to replace one or more of these controllers LIC, PIC, FIC, TIC (or AIC, which is not shown in Fig. 1).

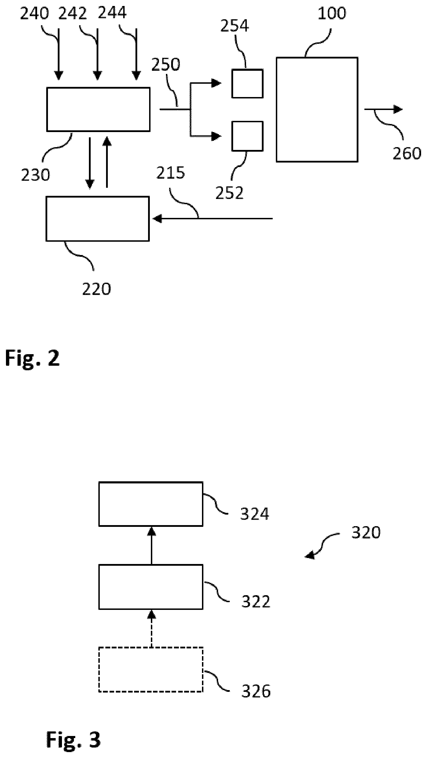

Fig. 2 schematically illustrates a method according to an embodiment of the invention. The method can be performed using the control system 200 shown in Fig. 1, for example, and the model predictive controller 210 with the control model 220 running on the control system 200. In Fig. 2, only the control model 220 is shown. Preferably, the model predictive controller is a nonlinear model predictive controller, i.e., the control model 220 is a nonlinear model.

Step 215 shows initialisation of the control model 220. This can comprise, for example, state estimation based on, e.g., (nonlinear extensions of) Kalman filters or the like. As mentioned, many parameters of the process plant or its processes cannot be or are not measured but are to be used for operating the process plant.

In step or procedure 230, one or more setpoints for one or more parameters of one or more processes of the process plant are determined (typically within an optimisation). By means of example, two setpoints 252, 254 are shown. As mentioned with respect to Fig. 1, different setpoints for different parameters can be determined. Determining these setpoints is based on the initialised control model 220 within, typically, an optimisation. In addition, further requirements or values can be considered in such optimisation, for example, process targets 240 (e.g., desired medium flows), process constraints 242 (e.g., product purity), and/or tuning parameters 244.

These setpoints are provided, in step 250, to operate the process plant 100, i.e., these setpoints are set in the real process plant 100 for, e.g., respective valves or medium flows or the like. Measurements 260 can then be made at the process plant 100. This can include measuring values of parameters for which the setpoints have been determined and/or other parameters. The measurements (or the measured values) can in addition be used within the step 230 of determining the setpoints as well as in step 215 of initializing the control model or, rather, new setpoints in a later point in time.

While Figs. 1 and 2 illustrate how to use a control model within a model predictive controller as such, Fig. 3 illustrates a control model 320 according to an embodiment of the invention in more detail. Control model 320 can correspond to control model 220, for example.

Control model 320 is a hybrid model comprising a data-based component 324 and a dynamic component 322. More than one data-based component and/or more than one dynamic component could also be used. The control model 320 is of a sequential structure, i.e., the dynamic component 322 and the data-based component 324 are arranged sequentially as illustrated in Fig. 3. The dynamic component 322 makes an (abstract) prediction in time and the data-based component "translates" these predictions into usable information, e.g., temperatures, pressures, quality scores or the like (as needed for the respective setpoints).

The dynamic component 322 can be or is based on low-dimensional dynamic components of a mathematically simple type. For example, dynamic component 322 can have a linear or bilinear structure, i.e., this component is a linear or bilinear dynamic model. Such a linear or bilinear structure reflects the modelled part of the process plant (e.g., a certain process) with linear behaviour. This allows an efficient and fast optimization calculation. The data-based component 324 can be based on, for example, one or more artificial neural networks.

Further, initialising the control model 320 (see also step 215 in Fig. 2), in particular the dynamic component 322 of the control model 320, can also be based on a data-based component, for example, data-based component 326. Similar to data-based component 324, data-based component 326 can be or be based on, for example, one or more artificial neural networks. Initialising the control model comprises determining initial or starting conditions of, e.g., internal states before the optimization process is started. A reason for the good efficiency is that the data component can take over the step that is otherwise (or usually) done by an extra algorithm (Kalman, etc., as mentioned above).

This sequential structure can very efficiently be used for optimisation because the time evolution of the (abstract) prediction does not depend on the data-based nonlinear component. As a consequence, the data-based nonlinear component is not explicitly part of the optimization problem; rather, the data-based nonlinear component is only (partially) implicitly evaluated as part of the operating constraints and cost function or the optimisation is based on or is performed using the at least one dynamic component, i.e., the at least one dynamic component only.

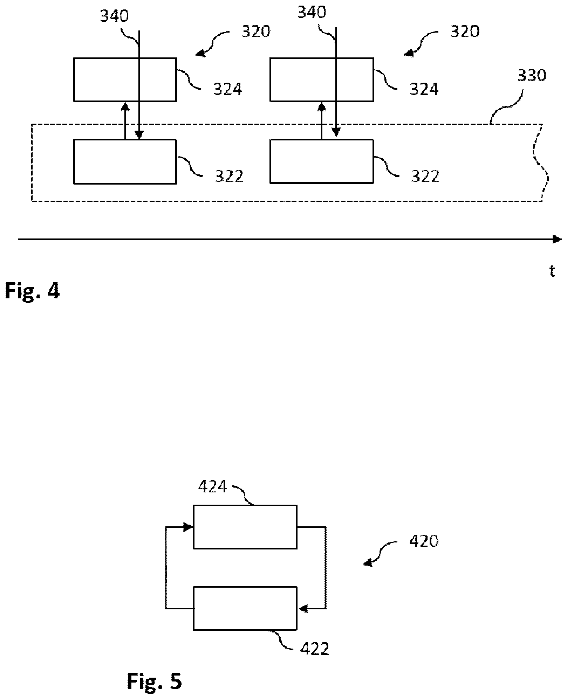

This, for example, is illustrated in Fig. 4, showing the control model 320 with the data-based component 324 and the dynamic component 322 two times, by means of example. An optimization 330 (which can be similar to step 230 shown in Fig. 2) makes use of the control variables and the variables of the dynamic component 322 only.

This also means that safety constraints 340, for example, which have to be considered can be translated "through" the data-based component 324 into the smaller variable space of the dynamic component 322, i.e., the safety constraints affect directly the dynamic component. The optimization problem thus has a smaller dimension and can be solved very efficiently.

Fig. 5 illustrates a control model 420 according to a further embodiment of the invention in more detail. Control model 420 can correspond to control model 220, for example. Control model 420 is a hybrid model comprising a data-based component 424 and a dynamic component 422. More than one data-based component and/or more than one dynamic component could also be used. The control model 420 is of an integrated structure, i.e., the dynamic component 422 and the data-based component 424 are integrated to one another as illustrated in Fig. 5.

Such an integrated structure cannot be exploited quite as effectively as the sequential structure, but in certain cases, this structure leads to more accurate models. Again, due to the simple structure, the optimization of such a model is generally (much) more efficient than the optimization of a (pure) physical model. Integrated, in particular, means that in the model information flows from the dynamic component to the data-based component and vice versa. As a result, the components are integrated and dependent on each other (unlike in the sequential structure, where the prediction by the dynamic component does not depend on the data-based component.

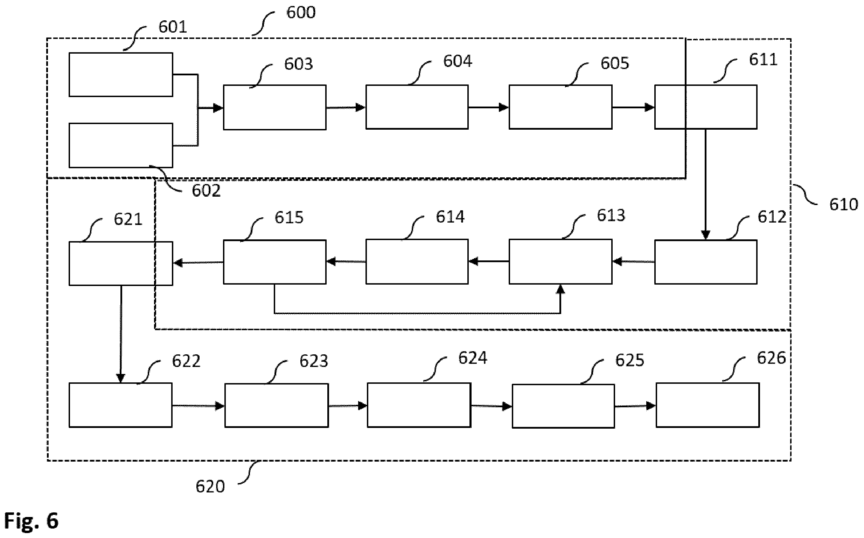

Fig. 6 schematically illustrates a method according to a further embodiment of the invention, in particular, relating to obtaining the control model. This can be divided in to three tasks or groups of steps. For reduced model generation, for example, a stepwise procedure can be used that clearly separates between task 600, digital twin modelling and simulation (data sampling), task 610, model reduction (model structure specification and training of data-based components), and task 620, controller design, testing and deployment. Thereby, structured steps are provided and gates and/or deliverables can be established in the modelling and control procedure. The different steps can be carried out by different experts of their individual fields.

In the following, an exemplary method is described with reference to Fig. 6. In step 601, design information (process information, i.e., information relating to the design of the processes) can be provided. In step 602, a substance data model and detailed models for individual processes can be provided. Based on the information provided in steps 601, 602, a model building and validation can be performed, step 603. A result of step 603 is a digital twin 604. Further, simulation and data sampling, step 605, can be performed in order to obtain relevant data and a complex model 611 for the digital twin.

As mentioned, the digital twin can be based on (or be) a (detailed) dynamic model of the process plant. This dynamic model can be based on at least one of thermo fluidic correlations, thermo dynamic correlations, phenomenological (i.e., empirical) correlations, mechanical equations (of state and physical properties of the plant and material and components used therein). Further, the dynamic model can be based on geometry and/or topology of components of the process plant. In an embodiment, the dynamic model can be configured to represent a transition from one to another state of the process plant, in particular, of a separation column of the plant.

Such a (physical) model is also called a first principles model as it is based on physical properties like heat and mass balances and the like. This model can represent the geometry and topology of equipment or components in the same level of detail that is being used in process and/or equipment design. That is, heat exchangers, for example, are modelled in one space dimension whereas distillation columns are modelled as a sequence of theoretical trays. This approach enables the use of design correlations for pressure drops, heat transfer coefficients, fluid holdup and so on. However, unlike the equipment design tools, this dynamic model in particular balances holdups for gas and liquid and energy and, hence, allows for modelling transient states of the plant. This dynamic model in particular also covers the entire operating range of the plant. The entire operating range can comprise start-up, regular operation, shut-down, and also failure management. Such model can also be a pressure-driven model (but does not necessarily have to be a pressure-driven model).

While task 600 relates to building or generating the (complex) model for the digital twin, task 610 relates to the model reduction for obtaining the control model like control models 220, 320, 420 mentioned above.

In step 612, data analysis (based on the model 611) is performed. This is followed by or comprises a selection of a reduced model structure, step 613. Based on the selected reduced model structure, the control model is built (model building), what includes training of the model, step 614. The built and trained model is validated, step 615. Depending on the validation process and its results, further or different selection of the reduced model structure (see step 613) might be necessary. The steps 613 to 615 can be repeated until the validation step 615 results in a desired or sufficiently reduced model 621.

The following task 620 relates to the controller design, testing and deployment. In step 622, the reduced model 621 is exported to create the control model for the NMPC, step 623. The control model is then tuned, step 624, tested, step 625, and finally deployed, step 626.

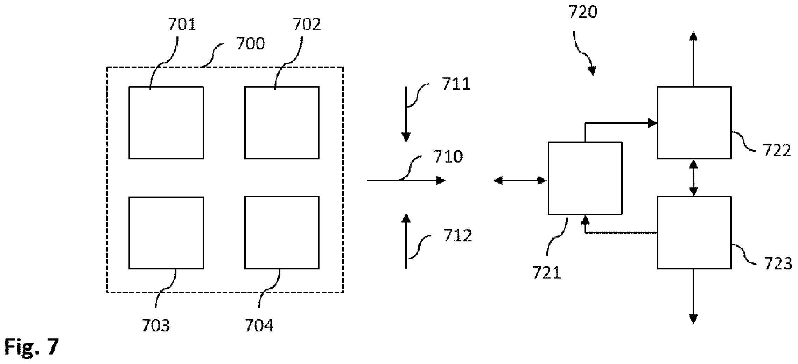

Fig. 7 schematically illustrates a method according to a further embodiment of the invention, in particular, relating to selecting a model structure as part of the reduced model building process.

A library 700 comprising generic reduced models or model components can be provided. By means of example, models 701, 702, 703 704 are included in the library 700. Using this library and its models, a step 710 of model building can be performed. This step 710 can correspond to, for example, step 613 of Fig. 6. For model building step 711, simulation data and process data, can be considered. Also, a structure of the processes to be modelled and its properties, step 712, can be considered.

The result of the model building is a reduced model 720 for a specific process (see also model 621 in Fig. 6; or 420 in Fig. 5; or 320 in Fig. 3; or 220 in Fig. 2; or 220 in Fig. 1). By means of example, three reduced model components or blocks 721, 722, 723 are included in the reduced model 720; the arrows from or to or between such reduced model blocks illustrate information, substance or energy streams.

To sum up, such library of generic models or formulations of the reduced models allows for reduced modelling of a particular process (model building) in a flow sheeting manner including process structure and other design information. Simulation data and/or process data (see steps 711, 712) can be incorporated in the model building procedure, where the data-based component(s) are specified, e.g., trained. The model building of the reduced model can start from a given digital twin model but can also be independent of the digital twin and build the reduced model from scratch in a flow sheeting manner.

## Claims

1. A method for operating a process plant (100), wherein the process plant (100) is configured to perform at least one of substance modifications and substance conversions, with the aid of at least one of physical, chemical, biological, and nuclear effects, preferably, separation of air into nitrogen and/or oxygen and/or argon and/or other components included in air,
said method comprising the following steps, performed by a control system (200) comprising a model predictive controller (210) having a control model (220, 320, 420), wherein the model predictive controller is a nonlinear model predictive controller, and wherein the control model (220, 320, 420) is a hybrid model, wherein the hybrid model comprises at least one data-based component (324, 326, 424) and at least one dynamic component (322, 422):
initialising (215) the control model;
determining (230), based on the initialised control model, one or more setpoints (252, 254) for one or more parameters of one or more process components and/or units of the process plant; and
providing (250) the one or more setpoints to control the process plant (100).

2. The method of claim 1, wherein the at least one dynamic component (322, 422) has a linear or bilinear structure.

3. The method of claim 1 or 2, wherein the at least one data-based component (324) and the at least one dynamic component (322) of the hybrid model (320) are arranged sequentially.

4. The method of claim 3, wherein determining (230) the one or more setpoints comprises an optimization (330), wherein the optimization is performed using the at least one dynamic component (322) variables only.

5. The method of claim 3 or 4, wherein initialising (215) the control model comprises initialising the at least one dynamic component based on the at least one data-based component or based on at least one other data-based component.

6. The method of any one of claims 3 to 5, wherein determining (230) the one or more setpoints comprises determining a prediction based on the at least one dynamic component (322), and determining the one or more setpoints, based on the prediction and the at least one data-based component (324).

7. The method of claim 1 or 2, wherein the at least one data-based component (424) and the at least one dynamic component (422) of the hybrid model (420) are integrated to one another.

8. The method of any one of the preceding claims, wherein the at least one data-based component (324, 326, 424) comprises or is based on an artificial neural network.

9. The method of any one of the preceding claims, further comprising: adapting the control model (220, 320, 420) by adapting the at least one data-based component (324, 424) and/or the at least one dynamic component (422).

10. The method of any one of the preceding claims, wherein the control model is obtained by model reduction from a digital twin (604).

11. The method of any one of the preceding claims, wherein the at least one data-based component is trained based on at least one of simulation data and process data.

12. The method of any one of the preceding claims, wherein the one or more parameters comprise one or more of the following parameters: a valve position, a flow of medium, a pressure of medium, a temperature of medium, a component concentration of medium, and a pump, compressor, or turbine throughput.

13. The method of any one of the preceding claims, wherein the process plant (100) comprises or is at least one of an air separation unit, a natural gas plant, an ethylene plant, a hydrogen plant and an adsorption plant.

14. A control system (200), configured, preferably by means of a computer program, to perform the method of any one of the preceding claims.

15. A process plant (100) configured to perform at least one of substance modifications and substance conversions, with the aid of at least one of physical, chemical, biological, and nuclear effects, wherein the process plant comprises the control system (200) of claim 14.
